# EUROPÄISCHE PATENTSCHRIFT

(11) **EP 1 291 746 B1**
(45) Veröffentlichungstag und Bekanntmachung des Hinweises auf die Patenterteilung: **05.07.2006**
(21) Anmeldenummer: 02009529.5
(22) Anmeldetag: 26.04.2002
(51) Int. Cl.: G05B 23/02, G05B 9/02, G05B 9/03

(54) **Elektronische Sicherheitschaltung**
Electronic safety circuit
Circuit de sécurité électronique

(30) Priorität: 06.09.2001 DE 10143816
(43) Veröffentlichungstag der Anmeldung: 12.03.2003
(73) Patentinhaber: EASTMAN KODAK COMPANY, Rochester, New York 14650 (US)
(72) Erfinder: Hetzer, Ralf, 24143 Kiel (DE); Kwasniewski, Mike, 24837 Schleswig (DE); Saage, Marcus, 24105 Kiel (DE); Schmidt, Uwe, 25597 Breitenberg (DE); Wagner, Lutz Michael, 24149 Kiel (DE); Zessin, Jörg, 24326 Ascheberg (DE)
(74) Vertreter: Lauerwald, Jörg

(56) Entgegenhaltungen:
- EP-A- 0 929 002
- DE-A- 4 217 831
- US-A- 5 657 132
- US-A- 6 125 251

## Beschreibung

Die Erfindung betrifft eine elektronische Sicherheitsschaltung zum Schalten von sicherheitsrelevanten Einrichtungen einer Druckmaschine nach Anspruch 1. Druckmaschinen weisen eine Vielzahl von sicherheitsrelevanten Bereichen auf, insbesondere im Innenraum der Druckmaschine. Bewegte Teile, elektrische Spannungen und Motoren im Innenraum der Druckmaschine stellen für einen Bediener nach dem Öffnen von Klappen oder Türen der Druckmaschine eine Gefahr dar, wenn sich der Bediener dem Innenraum nähert. Aus diesem Grund wird die Druckmaschine vor oder bei dem Öffnen des Innenraums abgeschaltet.

Das Abschalten wird auf gewöhnliche Weise vom Bediener über die Steuerungseinrichtung der Druckmaschine durchgeführt. Weiterhin wurden Einrichtungen entwickelt, welche die Druckmaschine bei Betätigen ihrer Klappen oder Türen automatisch abschaltet. Ein Nachteil hierbei ist, dass die Druckmaschine nach dem Abschalten einige Zeit benötigt, um wieder ihren Betriebszustand zu erreichen. Aufgabe der Erfindung ist, eine Druckmaschine sicher abzuschalten und die Betriebszeit der Druckmaschine zu erhöhen. Diese Aufgabe löst die Erfindung mit den Merkmalen des Anspruchs 1.

Mit diesen Merkmalen wird die Ausfallzeit der Druckmaschine erheblich gesenkt. Ferner erhöht die elektronische Sicherheitsschaltung die Personensicherheit. Vorteilhafte Ausführungen sind in den Unteransprüchen aufgeführt. Die Sicherheitsschalter können durch Betätigen von Klappen der Druckmaschine auslösbar sein. Mit diesem Merkmal wird das Betätigen des Sicherheitsschalters eingespart und die Sicherheit der Druckmaschine erhöht, da der Sicherheitsschalter bei jedem Öffnen der Klappe ausgelöst wird. Zur weiteren Erhöhung der Sicherheit können mit jedem Sicherheitsschalter zwei Signalleitungen verbunden sein, die unabhängig voneinander betrieben werden.

Es folgt eine detaillierte Beschreibung einer Ausführungsform der Erfindung in Bezug auf die Zeichnungen.
- Fig. 1: zeigt ein schematisches Blockschaltbild einer Ausführungsform der elektronischen Sicherheitsschaltung für das Schalten einer sicherheitsrelevanten Einrichtung,
- Fig. 2a: zeigt einen Datenflussplan eines Selbsttestes der elektronischen Sicherheitsschaltung,
- Fig. 2b: zeigt die Fortsetzung des Datenflussplans nach Fig. 2a,
- Fig. 2c: zeigt die Fortsetzung des Datenflussplans nach Fig. 2b,
- Fig. 3: zeigt einen Datenflussplan eines Kontrolllaufs zum Prüfen der Erfindung,
- Fig. 4a: zeigt einen Datenflussplan zum Überwachen der Hardware zum Deaktivieren von Einrichtungen,
- Fig. 4b: zeigt die Fortsetzung des Datenflussplans nach Fig. 4a,
- Fig. 5: zeigt einen Datenflussplan einer Funktion einer CPU der Erfindung,
- Fig. 6: zeigt ein Blockschaltbild einer Ausführungsform eines Zweigs der elektronischen Sicherheitsschaltung zum Schalten eines Motors einer Druckmaschine.

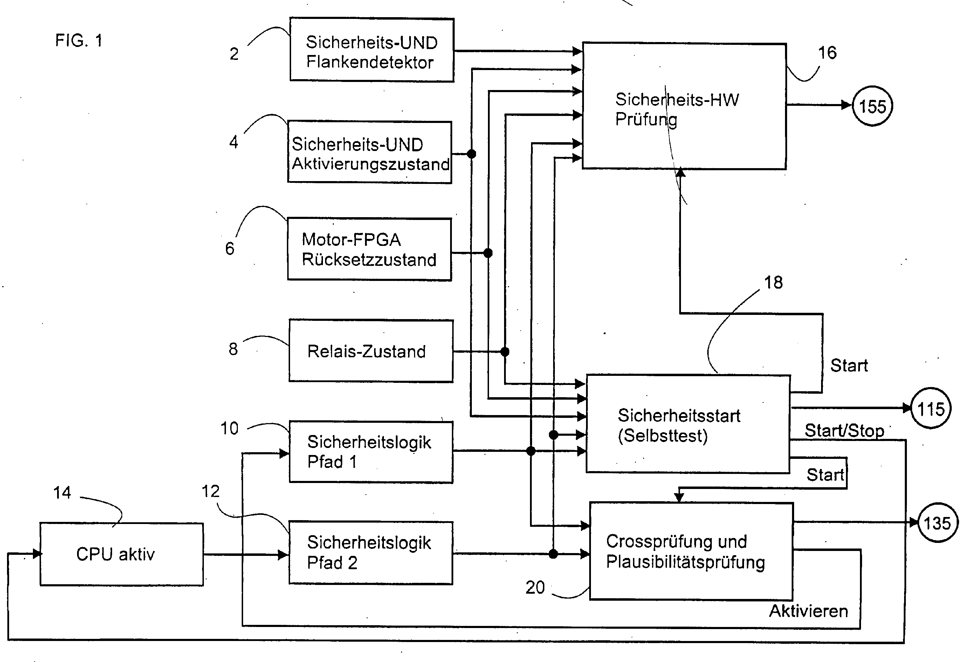

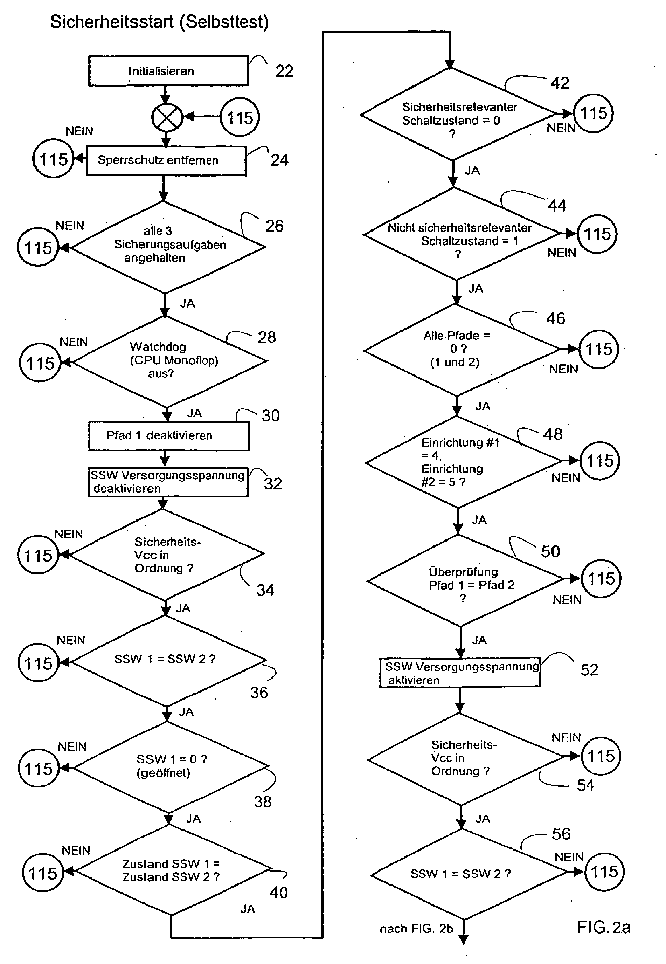

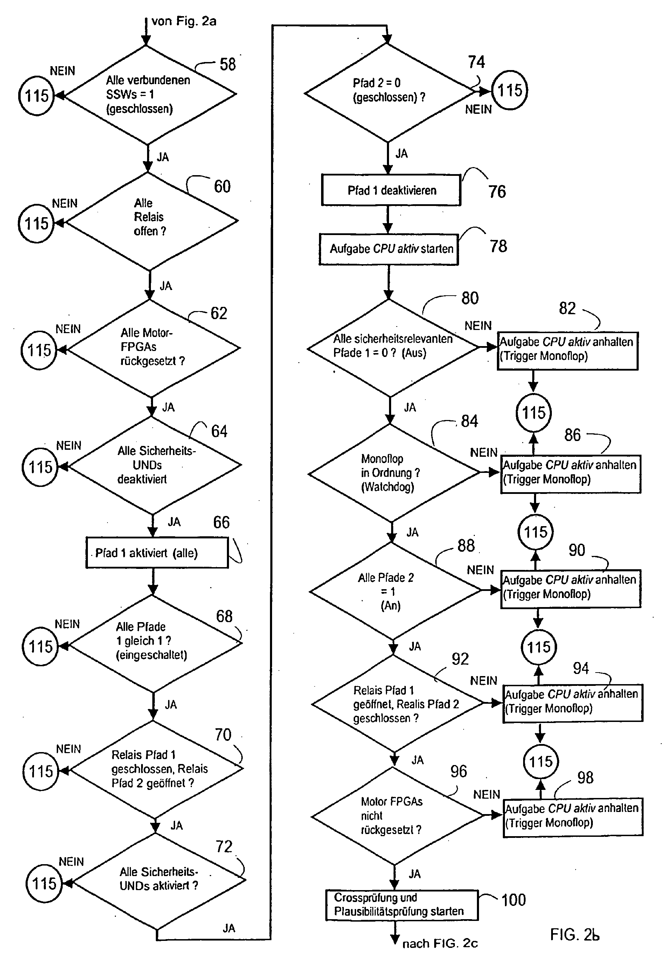

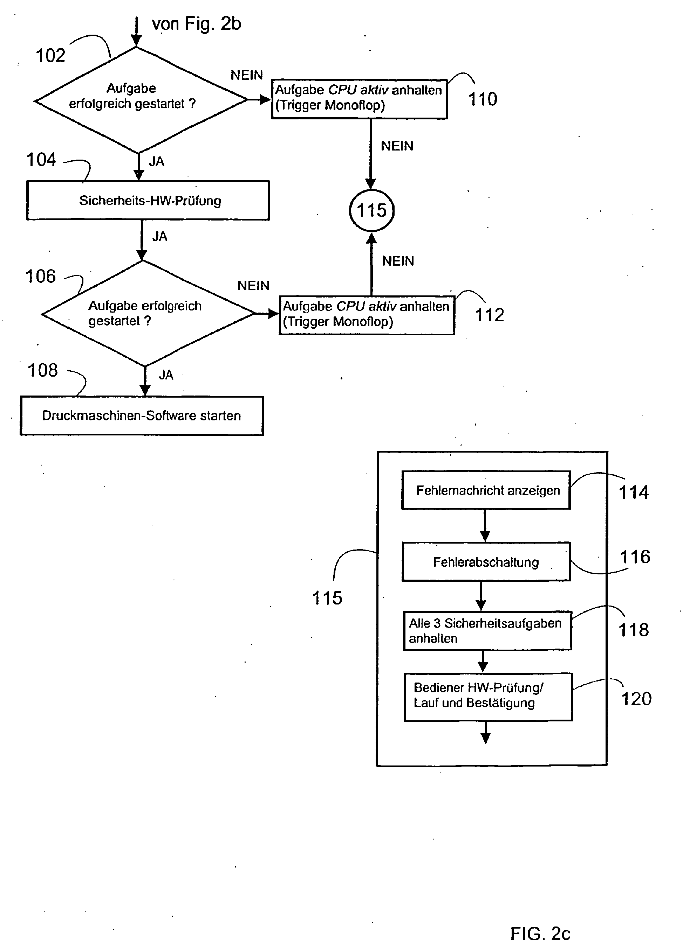

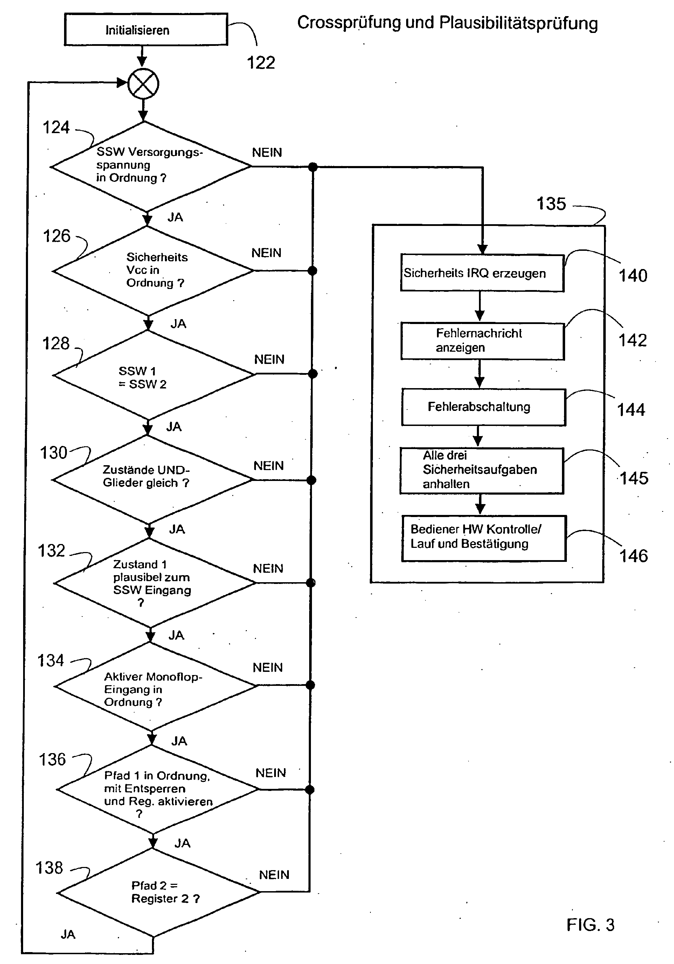

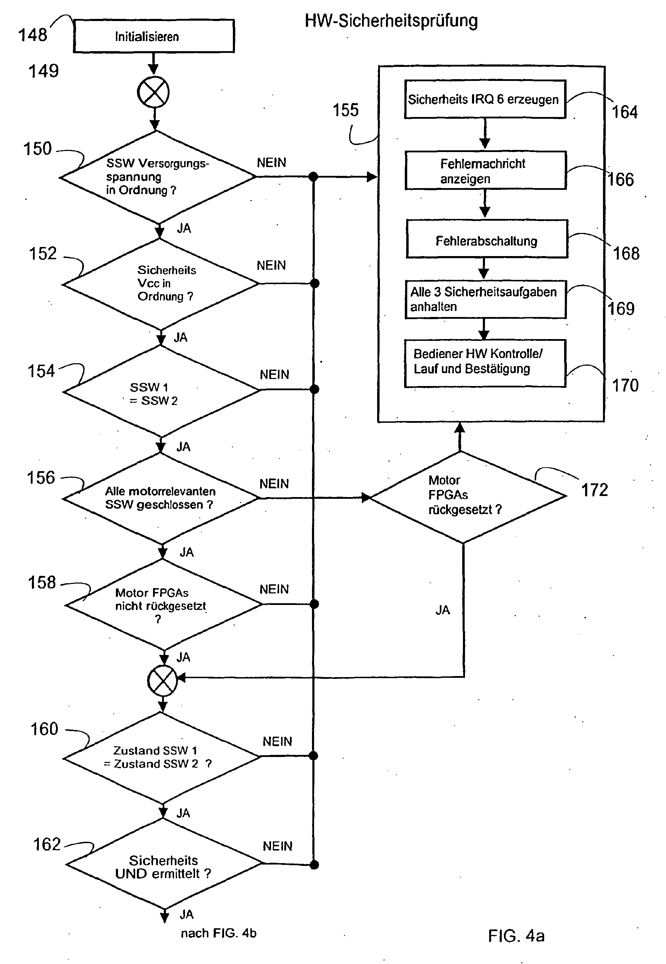

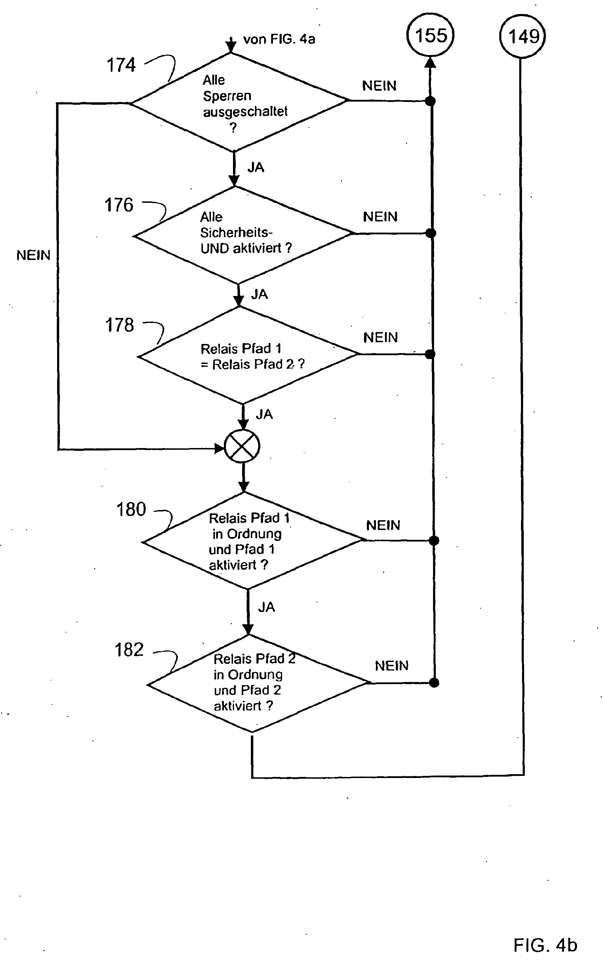

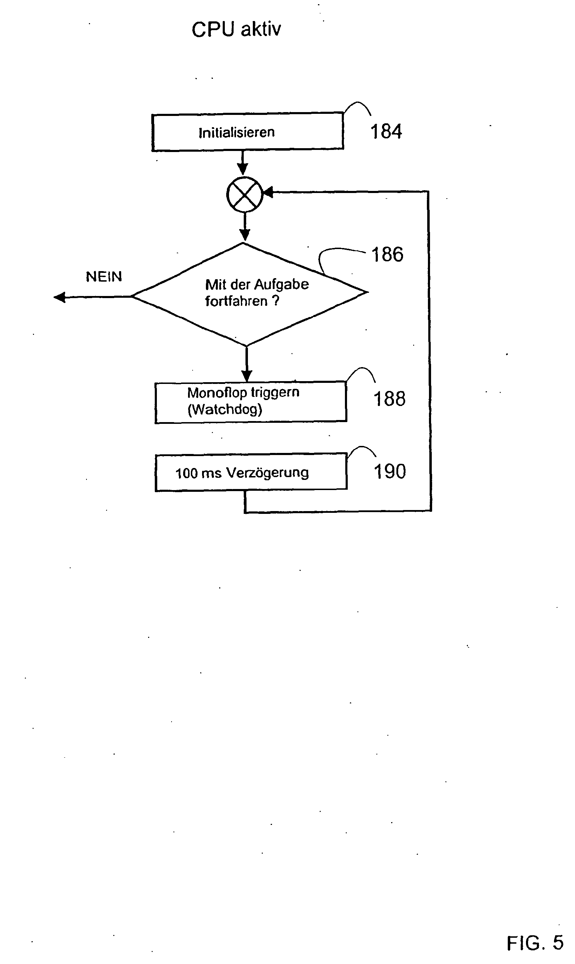

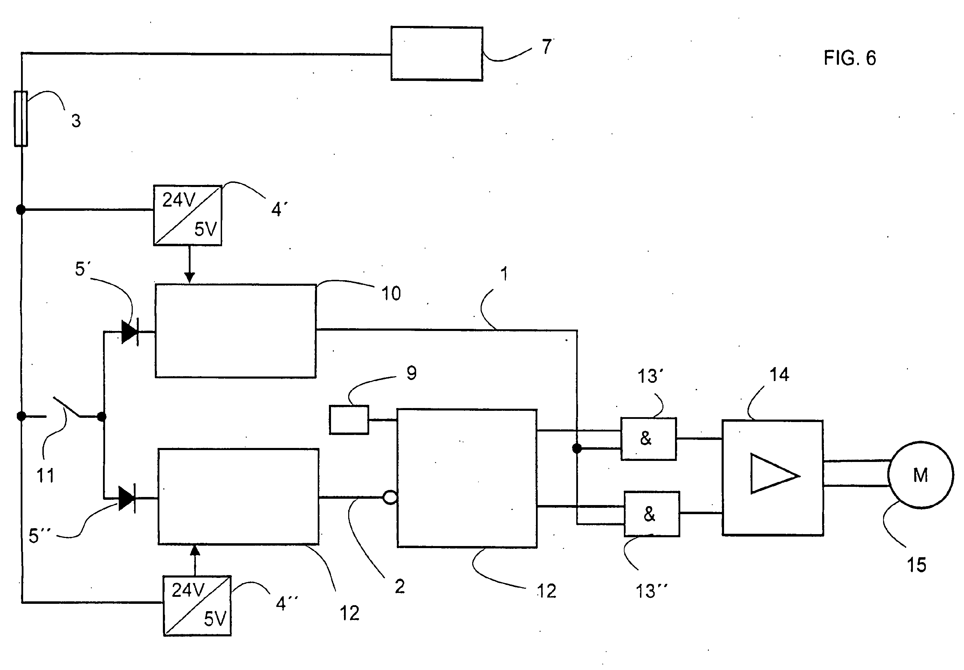

Fig. 1 zeigt ein Blockschaltbild einer Ausführungsform der elektronischen Steuerungsschaltung, welche dazu dient, verschiedene sicherheitsrelevante Einrichtungen der Druckmaschine selektiv zu schalten. Diese sicherheitsrelevanten Einrichtungen sind beispielsweise die Fixiereinrichtung, insbesondere ihre Heizlampen, der Antrieb und das Transportband, insbesondere seine Hochspannungsversorgung. Die Ausgänge der Blöcke 2, 4, 6 und 8 führen zur *Sicherheits-HW Prüfung* 16, der Prüfung der Hardware (HW) nach den Fig. 4a, Fig. 4b, und zum *Selbsttest* oder *Sicherheitsstart* 18 nach den Fig. 2a, Fig. 2b, Fig. 2c. Wie ersichtlich, wird vor dem Starten der Blöcke 14, 16, 20 der Block 18 durchlaufen, welcher nach dem Starten der Druckmaschine anläuft. Die Ausgänge einer ersten Sicherheitslogikschaltung 10 (Sicherheitslogik Pfad 1) und einer zweiten Sicherheitslogikschaltung 12 (Sicherheitslogik Pfad 2) führen jeweils zu den Blöcken 16, 18 und zum Block 20, *Crossprüfung und Plausibilitätsprüfung,* in dem der Programmablauf nach der Fig. 3 durchgeführt wird. Die Blöcke 16, 18, 20 weisen jeweils Ausgänge auf, welche unter bestimmten Bedingungen, die nachfolgend beschrieben sind, zu einem selektiven Anhalten von Teilen der Druckmaschine führen. Der Block 18 weist ferner Ausgänge auf, die zu einem Block 14 *CPU aktiv* führen, der in Fig. 5 in Einzelheiten dargestellt ist, zum Block 16 und zum Block 20, wobei ein Signal an einem der letzten beiden Ausgänge des Blocks 18 zum Start der jeweiligen Anweisungen der Blöcke 16 bzw. 20 führt. Der Block 20 weist ferner einen Ausgang auf, der zu der ersten Sicherheitslogikschaltung 10 führt und eine Sicherheitslogik eines ersten Pfads 1 auslöst oder aktiviert. Ferner ist ein zweiter Pfad 2 vorgesehen, der von der zweiten Sicherheitslogikschaltung 12 gesteuert ist. Der Schaltungsblock 14, *CPU aktiv,* ist mit dem Block 12, der zweiten Sicherheitslogikschaltung des zweiten Pfads 2 verbunden. Fig. 2a zeigt den Programmablaufplan des Schaltungsblocks 18, den *Sicherheitsstart* oder *Selbsttest*, der mit dem *Initialisieren* im Block 22 beginnt. Bei dieser Aufgabe nach den Fig. 2a, Fig. 2b, Fig. 2c werden Prüfungen der Funktionsfähigkeit der Hardware im Zusammenhang mit der elektronischen Sicherheitsschaltung durchgeführt, Prüfungen der anliegenden Versorgungsspannungen, Prüfungen, ob Sicherheitsschalter zum Schalten der sicherheitsrelevanten Einrichtungen der Druckmaschine sich öffnen, mittels Ausschalten der Schalterspannung, Vergleiche der Signale des ersten Pfads 1 und des zweiten Pfads 2, Prüfung der Funktionen der Sicherheitslogikschaltungen und Schalten von Relais des ersten Pfads 1 und des zweiten Pfads 2 zu Prüfzwecken, wobei die Relais die sicherheitsrelevanten Einrichtungen der Druckmaschine schalten. Der Block 18, *Sicherheitsstart (Selbsttest),* überwacht die Bauelemente der Druckmaschine, welche die sicherheitsrelevanten Einrichtungen an- und abschalten, die UND-Glieder, den Rücksetzeingang (Reset) einer FPGA (Field Programmable Gate Array) zur Steuerung eines Motors der Druckmaschine und die Schaltzustände der Relais. Nachfolgend wird Bezug genommen auf die Fig. 2a, Fig. 2b, Fig. 2c. Vorausgesetzt, ein Block 115 nach Fig. 2c sendet eine Signal, dann wird nach Fig. 2a im Block 24 ein Sperrschutz entfernt, welcher den Betrieb im Zusammenhang mit sicherheitsrelevanten Einrichtungen der Druckmaschine blockiert. Im Block 26 folgt die Prüfung, ob alle drei Sicherheitsaufgaben, die Prüfung, ob die CPU fehlerfrei arbeitet, *CPU aktiv,* die *Crossprüfung und Plausibilitätsprüfung* der Hardware nach Block 20 und die *Hardware-Sicherheitsprüfung* nach Block 16, angehalten sind. Nur in diesem Fall erfolgt im Block 28 die Prüfung, ob der sogenannte Watchdog, ein Monoflop-Bauelement, ausgeschaltet ist, d.h. einen Low-Pegel am Ausgang aufweist. Wenn jedoch wenigstens eine der drei Sicherheitsaufgaben zur Zeit der Abfrage aktiv ist oder der Monoflop einen High-Pegel aufweist, wird ein Signal an den Block 115 nach Fig. 2c übertragen, bei dem im Block 114 dem Bediener an der Steuerungseinrichtung der Druckmaschine eine Fehlernachricht angezeigt wird, im Block 116 der Fehler behoben wird, im Block 118 die drei vorgenannten Sicherheitsaufgaben angehalten werden und schließlich im Block 120 ein Bediener der Druckmaschine den weiteren Betrieb bestätigt. Bei erfolgreichem Durchlaufen des Blocks 115 springt der Programmablauf zurück und der *Selbsttest* nach Fig. 2a fährt mit dem Arbeitsschritt des Blocks 24 fort. Wenn der Watchdog nach Block 28 ausgeschaltet ist, wird der erste Pfad 1 abgeschaltet und die Versorgungsspannung an einem ersten Sicherheitsschalter 11 (SSW) abgestellt oder deaktiviert. Alle Klappen oder Türen der Druckmaschine, die erreichbare sicherheitsrelevante Einrichtungen abdecken, sind mit jeweils einem Sicherheitsschalter versehen, so dass beim Öffnen und Schließen der Tür oder Klappe der jeweilige zugeordnete Sicherheitsschalter betätigt wird. Abgeschaltet werden diejenigen sicherheitsrelevanten Einrichtungen der Druckmaschine, welche von einem Bediener der Druckmaschine nach dem Öffnen der Druckmaschine erreichbar sind und diesen gefährden. Hierzu ist bei der schematischen Darstellung der Block 18, wie beschrieben, mit dem Block 10, *Sicherheitslogik Pfad 1* des ersten Pfads 1 und über den Block 14 mit dem Block 12, *Sicherheitslogik Pfad 2* des zweiten Pfads 2, verbunden, wobei der erste Pfad 1 und der zweite Pfad 2 das Schalten der Relais steuern. Danach wird im Programmablauf nach Fig. 2a die Sicherheitsspannung Vcc 7 geprüft. Fällt die Prüfung negativ aus, wird Block 115 durchlaufen, anderenfalls wird im Block 36 geprüft, ob der erste Sicherheitsschalter 11 (SSW 1) und der zweite Sicherheitsschalter (SSW 2) den gleichen Schaltzustand aufweisen, und in Block 38 mittels Ausschalten der Schalterspannung, ob sich der erste Sicherheitsschalter 11 (SSW 1) öffnet. In der Fig. 6 ist nur der erste Sicherheitsschalter 11 (SSW 1) dargestellt, weitere Sicherheitsschalter sind in ähnlicher Weise verwendbar, je sicherheitsrelevanter zu schaltender Einrichtung ein Sicherheitsschalter. Die einzelnen Sicherheitsschalter bilden die Eingänge der ersten Sicherheitslogikschaltung 10 und der zweiten Sicherheitslogikschaltung 12, beispielsweise zwölf Sicherheitsschalter, die jeweils zwölf Eingänge der ersten Sicherheitslogikschaltung 10 und der zweiten Sicherheitslogikschaltung 12 bilden, welche jeweils sechs Ausgänge aufweisen, welche die Pfade zum Steuern der sicherheitsrelevanten Einrichtungen bilden. Die Blöcke 38, 40, 42, 44, 46, 48, 50, 52, 54, 56,58, 60, 62, 64, 68, 70, 72 und 74 senden jeweils ein Signal an den Block 115, wenn die im jeweiligen Block aufgeführte Bedingung nicht erfüllt ist. Ist die jeweilige Bedingung erfüllt, wird der jeweils nächste Block im Programmablaufplan durchlaufen. Ist der erste Sicherheitsschalter 11 geöffnet, wird im Block 40 geprüft, ob die Signalzustände des ersten Sicherheitsschalters 11 (SSW 1) und des zweiten Sicherheitsschalters (SSW 2) identisch sind, dann im Block 42, ob die sicherheitsrelevanten Schaltzustände abgeschaltet sind, die sicherheitsrelevanten Einrichtungen der Druckmaschine abgeschaltet sind. Weiterhin wird beim Programmablaufplan nach Fig. 2a in dieser Abfolge in den Blöcken 44, 46, 48, 50 geprüft, ob die nicht sicherheitsrelevanten Schaltzustände bei der Druckmaschine angeschaltet sind, ob der erste Pfad 1 und der zweite Pfad 2 abgeschaltet sind und ob der erste Pfad 1 den gleichen Schaltzustand wie der zweite Pfad 2 aufweist. Wenn dies zutrifft, wird die Versorgungsspannung an den Sicherheitsschaltern SSW wieder aktiviert, wie im Block 52 dargestellt. Anschließend wird im Block 54 überprüft, ob die Sicherheitsspannung 7 (Vcc) fehlerfrei anliegt. Die Sicherheitsspannung 7 beträgt hierbei 24 V und ist über eine Sicherung 3 und den ersten Sicherheitsschalter 11 (SSW 1) mit dem Schaltungsblock 10, der *Sicherheitslogik Pfad 1,* und mit dem Schaltungsblock 12, der *Sicherheitslogik Pfad 2,* verbunden, welche den jeweiligen Pfad aktivieren oder deaktivieren. Im Block 56 wird geprüft, ob die Schaltzustände des ersten Sicherheitsschalters 11 (SSW 1) und des zweiten Sicherheitsschalters (SSW 2) gleich sind. Der Programmablaufplan wird in Fig. 2b fortgeführt. Block 58 prüft, ob die Sicherheitsschalter (SSWs) geschlossen sind, Block 60, ob alle Relais geöffnet sind. Hierzu sind den Relais Steuerungskontakte zugeordnet, welche mit den Arbeitskontakten der Relais verbunden sind und den Schaltungszustand der Relais prüfen. Bei der elektronischen Sicherheitsschaltung werden im Wesentlichen Relais verwendet, um Spannungen zu schalten. Diese werden einzeln von Transistoren gesteuert, wobei jeder Pfad 1, 2 ein Relais umfasst. Um eine Redundanz zu erreichen, sind die Betriebskontakte von jeweils zwei Relais, welche in einzelnen Pfaden 1, 2 angeordnet sind, in Reihe geschaltet. Die Relais verfügen über Steuerungskontakte, um die Relaisfunktion zu überwachen. Block 62 prüft, ob alle Logikschaltungen (FPGAs, Field Programmable Gate Array) des Motors 15 der Druckmaschine rückgesetzt oder ein Reset durchgeführt ist und in Block 64, ob alle UND-Gatter 13', 13" deaktiviert sind. Wenn die vorstehenden Bedingungen erfüllt sind, wird in Block 66 der Pfad 1 aktiviert, indem ein Signal vom Block 18, *Sicherheitsstart (Selbsttest),* zum Block 10, *Sicherheitslogik Pfad 1,* übertragen wird. Darauffolgend wird in den Blöcken 68, 70, 72, 74 geprüft, ob die vorstehende Aufgabe erfüllt ist und der erste Pfad 1 in der Tat aktiviert ist oder ein Signal am Ausgang des Blocks 10 anliegt, ob die Relais des ersten Pfads 1 geschlossen und die Relais des zweiten Pfads 2 geöffnet sind, ob alle Sicherheits-UND-Gatter aktiviert sind und ob alle zweiten Pfade 2 abgeschaltet sind. Wenn die vorstehenden Bedingungen zutreffen, wird im Block 76 der Pfad 1 deaktiviert und im Block 78 die Aufgabe *CPU aktiv* gestartet, wie in Block 14 und in Fig. 5 dargestellt. Danach wird abgefragt, ob alle sicherheitsrelevanten ersten Pfade 1, d.h. die ersten Pfade 1 von jeweils einer sicherheitsrelevanten Einrichtung, ausgeschaltet sind. Wenn dies nicht der Fall ist, wird die Aufgabe *CPU aktiv* angehalten. Ebenso wenn die Bedingungen der Blöcke 84, 88, 92, 96 nicht erfüllt sind. Im umgekehrten Fall wird in Block 84 das Monoflop, der Watchdog, auf Funktionsfähigkeit geprüft, in Block 88, ob alle zweiten Pfade 2 angeschaltet sind, in Block 92, ob das Relais im ersten Pfad 1 geöffnet und das Relais im zweiten Pfad 2 geschlossen sind, in Block 96, ob die FPGA-Logikgatter des Motors nicht rückgesetzt sind. Wenn alle vorstehenden Bedingungen erfüllt sind, wird im Block 100 nach Fig. 2b die *Crossprüfung* und die *Plausibilitätsprüfung* gestartet, die in Fig. 3 dargestellt ist. Hierzu sendet der Block 18 ein Startsignal an den Block 20. In Fig. 2c ist der Selbsttest fortgeführt. Im Block 102 wird geprüft, ob die Aufgabe *Crossprüfung und Plausibilitätsprüfung* erfolgreich gestartet ist. Wenn diese Aufgabe nicht gestartet ist, wird der Block 14 *CPU aktiv* angehalten, anderenfalls wird die dritte Aufgabe in Block 16 gestartet, die Prüfung der Sicherheits-Hardware *(HW-Sicherheitsprüfung)* nach den Fig. 4a, Fig. 4b. Nach dem Befehl zum Starten der dritten Aufgabe wird geprüft, ob die dritte Aufgabe erfolgreich gestartet ist. Wenn dies nicht der Fall ist, wird die Aufgabe *CPU aktiv* angehalten. Anderenfalls wird die Software zum Steuern der Druckmaschine gestartet. Im folgenden ist die Aufgabe des Blocks 20 nach Fig. 1 beschrieben, dessen Programmablauf in FIG: 3 dargestellt ist. Der Block 20 steuert den ersten Pfad 1. Nach dem Schließen der Tür oder Klappe der Druckmaschine wird die Funktion des Entsperrens vom Block 20 durchgeführt, wobei eine Bestätigung zum Entsperren vom Bediener der Druckmaschine erforderlich ist. Zunächst wird im Block 122 initialisiert. Die *Crossprüfung und Plausibilitätsprüfung* ist ein geschlossener Kreis, bei Erfüllung der Bedingungen der Blöcke 124, 126, 128, 130, 132, 134, 136, 138 folgen diese aufeinander, bei jeder nicht erfüllten Bedingung ergeht ein Signal an den Block 135 mit den Blöcken 140, 142, 144, 146, in welchem zuerst ein Sicherheitssignal IRQ erzeugt wird, ein Interrupt-Befehl zum Unterbrechen des Programmablaufs. Als Reaktion auf den Interrupt-Befehl erhält der Bediener eine Fehlernachricht, welche an einer Anzeige der Steuerungseinrichtung der Druckmaschine angezeigt wird. Der Fehler wird beseitigt, alle drei Sicherheitsaufgaben werden angehalten und der Bediener bestätigt den weiteren Lauf der Druckmaschine. Das Anhalten der Aufgabe *CPU aktiv* öffnet den zweiten Pfad 2, weil das Monoflop (Watchdog) nicht wieder getriggert ist.

Bei der *Crossprüfung und Plausibilitätsprüfung* wird das logische Verhalten zwischen dem ersten Pfad 1und dem zweiten Pfad 2 geprüft. Im Block 124 nach Fig. 3 wird geprüft, ob die Versorgungsspannung an den Sicherheitsschaltern SSW fehlerfrei anliegt. Wenn dies der Fall ist, wird im Block 126 geprüft, ob die an den Sicherheitsschaltern und den Sicherheitslogikschaltungen 10, 12 anliegenden Spannungen korrekt sind. In diesem Fall wird im Block 128 geprüft, ob die Eingangssignale des ersten Sicherheitsschalters 11 (SSW 1) und des zweiten Sicherheitsschalters (SSW 2) identisch sind. Der erste Sicherheitsschalter 11 (SSW 1) führt zu einem ersten Pfad 1 und der zweite Sicherheitschalter (SSW 2) führt zu einem zweiten Sicherheitspfad 2. Im Block 130 werden die UND-Glieder des ersten Pfads 1 mit den entsprechenden UND-Gliedern des zweiten Pfads 2 verglichen. Bei Gleichheit folgt in 132 eine Plausibilitätsprüfung, bei der das Signal am jeweiligen Pfad 1,2 unter Verwendung der Eingangssignale der Sicherheitsschalter berechnet wird. Für Plausibilität ist das berechnete Signal am jeweiligen Pfad 1, 2 gleich dem Signal in jedem Pfad 1, 2. Im Block 134 wird der Eingang des Monoflops (Watchdog) für den zweiten Pfad 2 geprüft, um zu gewährleisten, dass die Aufgabe *CPU aktiv* und das Monoflop fehlerfrei arbeiten. Im Block 136 wird geprüft, ob der erste Pfad 1 funktionstüchtig ist, indem die Information über den Sperrschutz und die Daten in Registern der Sicherheitslogikschaltungen 10, 12 geprüft werden, wobei die Register mit den Eingängen der UND-Glieder verbunden sind. Sind diese drei Bedingungen erfüllt, wird als letztes im Block 138 geprüft, ob der Zustand im zweiten Pfad 2 identisch mit dem Zustand des entsprechenden Registerinhalts der Sicherheitslogikschaltungen 10, 12 ist. Die dritte Aufgabe nach Block 16 ist im Programmablaufplan nach den Fig. 4a, Fig. 4b dargestellt. Zuerst wird in Block 148 initialisiert. Die Aufgabe *HW-Sicherheitsprüfung* stellt einen geschlossenen Kreis dar und ermittelt Fehler von Bauteilen der elektronischen Sicherheitsschaltung, welche sicherheitsrelevante Einrichtungen der Druckmaschine abschalten, beispielsweise das FPGA des Motors, UND-Glieder für die Unterbrechung und die Relais eines Schrittmotors. Das Signal zum Starten des ersten Blocks 150 kommt vom letzten Block 162 dieser Aufgabe. Im Block 150 wird geprüft, ob die Versorgungsspannung am Sicherheitsschalter korrekt anliegt. Wenn dies nicht der Fall ist, wird der Block 155 mit den Blöcken 164, 166, 168, 169, 170 angesteuert. Dort wird ein Sicherheits-IRQ erzeugt, eine Unterbrechung oder Interrupt-Befehl des Programmablaufs, eine Fehlernachricht an einer Anzeige der Druckmaschine angezeigt, der Fehler abgeschaltet, alle drei Aufgaben oder Sicherheitsaufgaben angehalten und zuletzt die Bestätigung des Bedieners der Druckmaschine erhalten. Ebenso führen nicht erfüllte Bedingungen der Blöcke 152, 154, 156, 158, 160, 162, 174, 176, 178, 180, 182 zum Durchlaufen des Blocks 155. Anderenfalls wird im Block 152 geprüft, ob die Spannung Vcc anliegt, im Block 154 der Zustand des ersten Sicherheitsschalters 11 (SSW 1) gleich dem Zustand des zweiten Sicherheitsschalters (SSW 2) ist und im Block 156, ob alle motorrelevanten Sicherheitsschalter SSW geschlossen sind. Sind nicht alle motorrelevanten Sicherheitsschalter SSW geschlossen, werden die FPGAs des Motors rückgesetzt und der Programmablauf fährt mit dem Block 160 fort. Andererifalls wird geprüft, ob die FPGAs des Motors nicht rückgesetzt oder deren Speicher nicht entleert sind, und im Block 160, ob der Zustand des ersten Sicherheitsschalters 11 gleich dem Zustand des zweiten Sicherheitsschalters ist. Beim Block 162 wird ermittelt, ob im FPGA ein Signal am Ausgang des UND-Glieds anliegt, d.h. alle Sicherheitsschalter der elektronischen Schaltung geschlossen sind. Der Programmablauf fährt mit der Fig. 4b fort. Wenn in Block 174 alle Sperren ausgeschaltet sind, d.h. die Druckmaschine betriebsfähig ist, wird im Block 176 abgefragt, ob alle UND-Glieder der FPGAs aktiviert sind. Im anderen

Fall wird mit dem Block 180 fortgefahren. Im Block 178 wird verglichen, ob der Schaltungszustand des Relais des ersten Pfads 1 gleich dem Schaltungszustand des Relais des zweiten Pfads 2 ist. Die Relais werden überprüft, indem die Zustände ihrer Steuerungskontakte gelesen werden. Danach wird im Block 180 geprüft, ob das Relais des ersten Pfads 1 funktionstüchtig und der Pfad 1 aktiviert ist. Im letzten Block wird geprüft, ob das Relais 2 funktionstüchtig und der Pfad 2 aktiviert ist. Fig. 5 zeigt einen Programmablaufplan der dritten Aufgabe *CPU aktiv* des Blocks 14, welcher die Blöcke 184, 186, 188, 190 umfasst. Bei dieser Aufgabe wird zunächst im Block 184 eine Initialisierung durchgeführt. Nach einer Zeitverzögerung von 100 ms im Block 190 wird im Block 186 entschieden, ob mit der Aufgabe fortgefahren wird oder ob die Aufgabe angehalten wird. Anschließend wird im Block 188 der Monoflop (Watchdog) getriggert. Die Aufgabe nach Fig. 5 steuert den zweiten Pfad 2. Fig. 6 zeigt ein Blockschaltbild einer Ausführungsform eines Zweigs der elektronischen Sicherheitsschaltung zum Schalten eines Motors einer Druckmaschine. Zu beachten ist, dass in Fig. 6 nur eine Schaltung zum Schalten einer Einrichtung der Druckmaschine dargestellt ist, weitere Schaltungen sind für andere sicherheitsrelevante Einrichtungen der Druckmaschine vorgesehen. Hierbei wird das Schalten der Einrichtung, in diesem Fall ein Motor 15, nicht von Relais durchgeführt, sondern durch Abschalten der Motorphasen. Hierzu speist die Sicherheitsspannung 7 ein Spannung von 24 V in die Schaltung ein, die in den Spannungswandlern 4', 4" zu 5 V gewandelt und in die erste Sicherheitslogikschaltung 10 bzw. die zweite Sicherheitslogikschaltung 12 eingespeist wird. Die erste Sicherheitslogikschaltung 10 und die zweite Sicherheitslogikschaltung 12 weisen folglich jeweils eine eigene Spannungsversorgung 4' bzw. 4" auf. Die erste Sicherheitslogikschaltung 10 und die zweite Sicherheitslogikschaltung 12 umfassen jeweils Anordnungen von UND-Gliedern, jeweils ein UND-Glied je Pfad 1, 2, von denen in dieser Beschreibung nur der erste Pfad 1 und der zweite Pfad 2 aufgeführt sind, weitere Pfade sind für weitere sicherheitsrelevante Einrichtungen bereitgestellt. Der Ausgang der ersten Sicherheitslogikschaltung 10 ist mit Pfad 1 bezeichnet, der Ausgang der zweiten Sicherheitslogikschaltung 12 ist mit Pfad 2 bezeichnet. Der zweite Pfad 2 führt zu einem negierten Reset-Eingang eines Signalgenerators 12. Der Ausgang der ersten Sicherheitslogikschaltung 10 ist mit den Eingängen eines ersten UND-Glieds 13' und eines zweiten UND-Glieds 13" verbunden. Ferner sind die Eingänge der UND-Glieder 13' und 13" mit den Ausgängen eines Signalgenerators 12 zur Energiebereitstellung für den Motor 15 verbunden. Die Ausgänge der UND-Glieder 13', 13" sind über einen Verstärker 14 mit dem zu schaltenden Motor 15 verbünden. Der erste Pfad 1 sperrt Eingangssignale zum Motor 15, der zweite Pfad 2 sperrt die Erzeugung von Phasensignalen im Signalgenerator 14 zum Antrieb des Motors 15. Das Abschalten des Motors 15 als Sicherheitsmaßnahme wird hierbei durch Redundanz des ersten Pfads 1 und des zweiten Pfads 2 erreicht. Die vorstehend beschriebene elektronische Sicherheitsschaltung ist derart betrieben, dass ein beliebiger auftretender Fehler, etwa ein falscher Schaltungszustand, nicht zu falschen Schaltergebnissen an den zu schaltenden sicherheitsrelevanten Einrichtungen führt. Dies bedeutet, selbst bei Auftreten eines Fehlers in der Sicherheitsschaltung wird die betreffende sicherheitsrelevante Einrichtung beim Öffnen des Gehäuses der Druckmaschine sicher abgeschaltet.

## Patentansprüche

1. Elektronische Sicherheitsschaltung zum Schalten von sicherheitsrelevanten Einrichtungen einer Druckmaschine, welche mehrere Sicherheitsschalter (11) zum selektiven Schalten der sicherheitsrelevanten Einrichtungen der Druckmaschine bei geöffnetem oder teilweise geöffnetem Gehäuse der Druckmaschine aufweisen, wobei als sicherheitsrelevant diejenigen Einrichtungen anzusehen und abzuschalten sind, welche von einem Bediener der Druckmaschine nach dem Öffnen der Druckmaschine erreichbar sind und diesen gefährden, wobei die Sicherheitsschalter (11) vorzugsweise bei Klappen oder Türen der Druckmaschine angeordnet und durch Öffnen und Schließen der Klappen oder Türen betätigbar sind,
**dadurch gekennzeichnet,**
**dass** die Sicherheitsschalter (11) jeweils mit zwei unabhängig voneinander betriebenen Signalleitungen oder Pfaden (1, 2) verbunden sind und dass die einzelnen Sicherheitsschalter die Eingänge einer ersten Sicherheitslogikschaltung (10) und einer zweiten Sicherheitslogikschaltung (12) bilden, welche jeweils Ausgänge aufweisen, welche die Pfade zum Steuern der sicherheitsrelevanten Einrichtungen bilden

2. Elektronische Sicherheitsschaltung nach Anspruch 1, **dadurch gekennzeichnet, dass**, um eine Redundanz zu erreichen, Betriebskontakte von jeweils zwei Relais, welche in den einzelnen Pfaden (1, 2) angeordnet sind, in Reihe geschaltet sind.

3. Elektronische Sicherheitsschaltung nach Anspruch 1 oder 2, **dadurch gekennzeichnet, dass** die fehlerfreie Funktion der elektronischen Sicherheitsschaltung in einem Selbsttest automatisch prüfbar ist.

## Claims

1. Electronic safety circuit for switching safety-relevant devices of a printing machine, said devices comprising several safety switches (11) for selectively switching safety-relevant devices of the printing machine when the housing of said printing machine is opened or is partially opened, the devices to be viewed as the safety-relevant devices and to be switched off being those devices which can be reached by and which can be hazardous to an operator of the printing machine after the printing machine has been opened, and the safety switches (11) being preferably located at flaps or doors of the printing machine and being actuable by opening and closing said flaps or doors,
**characterized in that**
each of the safety switches (11) is connected with two separately operated signal lines or paths (1, 2), and that the individual safety switches form the inputs of a first logic safety circuit (10) and a second logic safety circuit (12), each of said circuits having outputs forming the paths for the controlling safety-relevant devices.

2. Electronic safety circuit as in Claim 1, **characterized in that**, in order to achieve a redundancy, operational contacts of two relays respectively arranged in the individual paths (1, 2) are connected in series.

3. Electronic safety circuit as in Claim 1 or 2, **characterized in that** the error-free function of the electronic safety circuit can be automatically tested by means of a self test.

## Revendications

1. Circuit de sécurité électronique de coupure de dispositifs relevant de la sécurité d'une machine à imprimer comprenant plusieurs disjoncteurs de sécurité (11) pour la coupure sélective des dispositifs de sécurité de la machine à imprimer lorsque le carter de cette dernière est ouvert ou partiellement ouvert, le terme « dispositifs relevant de la sécurité » désignant les dispositifs que le personnel de service de la machine à imprimer peut atteindre après ouverture de la machine à imprimer et qui constituent un risque pour sa sécurité, lesdits disjoncteurs de sécurité (11) étant de préférence disposés sur les trappes et/ou portes de la machine à imprimer et déclenchés par l'ouverture / fermeture de ces trappes et/ou portes,
**caractérisé en ce que**
les disjoncteurs de sécurité (11) sont respectivement reliés à deux lignes ou chemins de signalisation (1, 2) indépendants et que les disjoncteurs de sécurité individuels constituent les entrées d'un premier circuit logique de sécurité (10) et d'un second circuit logique de sécurité (12) dont chacun comprend des sorties constituant les chemins de signalisation utilisés pour commander les dispositifs de sécurité.

2. Circuit de sécurité électronique selon la revendication 1, **caractérisé en ce que,** pour assurer une redondance, des contacts de respectivement deux relais disposés dans les chemins de signalisation (1, 2) individuels sont montés en série.

3. Circuit de sécurité électronique selon la revendication 1 ou 2, **caractérisé en ce que** le bon fonctionnement du circuit de sécurité électronique peut être vérifié automatiquement par un autotest.
